# EUROPEAN PATENT APPLICATION

(11) **EP 3 273 402 A1**
(43) Date of publication of application: **24.01.2018**
(21) Application number: 16180569.2
(22) Date of filing: 21.07.2016
(51) Int. Cl.: G06Q 40/00, G06Q 40/06

(54) **METHOD FOR COLLECTING AND PROCESSING ELECTRONIC DONATIONS FROM AN FINANCIAL ACCOUNT**

(71) Applicant: MasterCard International Incorporated, Purchase NY New York 10577-2509 (US)
(72) Inventor: CUNNINGHAM, Sarah, Dublin (IE)
(74) Representative: Murgitroyd & Company

(57) **Abstract**

A method for collecting and processing electronic donations from an electronic account of a user, initiated by the user at a user terminal, the method comprising
presenting, on a electronic donation application, potential recipients for the electronic donation;
receiving, a user selection of a recipient for the electronic donation together with the amount of the financial transaction for the donation;
transmitting a donation request including the amount of the financial transaction, the designated recipient for the financial transaction, user information and electronic account information to a donation processing server,
storing the donation request, by a collection application executed on the donation processing server for further processing when a predefined condition is met;
receiving, at the donation processing server, a financial transaction confirmation receipt from the payment service provider and transmitting, a donation confirmation to the recipient.

## Description

### Technical Field

The present disclosure relates to the field of financial transactions made from a financial account. More particularly, the present disclosure relates to a method for initiating financial transactions to a designated entity and the subsequent processing of the financial transaction. Moreover, the disclosure relates to a computer program and a computer readable medium. The computer readable medium comprises computer-executable instructions, which, when executed by the respective devices being equipped with processors cause the devices to perform the method steps of the disclosure on the respective device interacting with the respective other device.

### Background

Electronic financial transactions have become more and more important in daily life. Many of these financial transactions are nowadays based on dedicated applications running on a terminal accessed by a user providing an interface interconnecting the merchant with a financial account of the user. The involved processes often do not require direct interaction with further means of payment, e.g. with a debit or credit card, as the respective information is stored in the application, e.g. as a softcard, or is accessible by the application. Examples for such financial transactions are, amongst others, cashless payment on a website or mobile payment and digital wallet services executed on a mobile device such as a smartphone. Especially the latter is suitable for substituting payments by cash and therefore render the requirement to carry cash for many people obsolete.

However, certain entities such as charitable organisations, especially those directly collecting small amounts of money, rely on people carrying cash. Especially when people are carrying small amounts of cash with them, they tend to donate small amounts e.g. to collecting boxes which are positioned close to a cash register or at the exit of a store or the like. Even though electronic financial transaction methods are suitable for transferring money, their use for handling such small amounts which are donated easily is often considered inefficient and inconvenient. As a consequence thereof, the evolvement of cashless living reduces the possibilities for charitable organisations to get donations.

Accordingly, in the light of the increasing importance of cashless living, there is a requirement to provide technical solutions to connect these kind of entities into electronic financial transaction procedures.

### Summary of the invention

The present disclosure provides one or more solutions to the problems and disadvantages existing due to evolved payment and cash handling behaviour. Other technical advantages of the present disclosure will be readily apparent to one skilled in the art from the following description and claims.

The present disclosure is directed to a computer implemented method for collecting and processing electronic donations, i.e. financial transaction from a financial account of a user to a financial account of at least one destination entity, such as the financial account of a charitable organisation, initiated by the user at a user terminal, the method comprising:
- providing an electronic donation application to be executed on the user terminal;
- presenting, via user selection of a recipient for the electronic donation, at least one destination entity as potential recipient for the electronic donation;
- receiving, via the electronic donation application, a user selection of a recipient for the electronic donation together with the amount of the financial transaction for the donation;
- transmitting, from the electronic donation application, a donation request to a donation processing server, the request including the amount of the financial transaction, the designated recipient for the financial transaction, user information and electronic account information;
- storing the donation request, by a collection application executed on the donation processing server;
- transmitting at least one financial transaction request from the donation processing server to a payment service provider for processing the financial transaction from the financial account of the user to a donation receiving entity, wherein the at least one financial transaction request is transmitted when the amount(s) specified in the donation request(s) stored by the collection application exceed a predefined threshold amount and/or after a predefined period of time has lapsed;
- receiving, at the donation processing server, a financial transaction confirmation receipt from the payment service provider, indicating that the financial transaction has been processed;
- transmitting, from the donation processing server, a donation confirmation to the selected destination entity, the donation confirmation containing at least the amount corresponding to the designated recipient and the user information.

The present disclosure includes multiple aspects for collecting and processing electronic donations from an electronic account of a user, initiated by the user on a user terminal via an electronic donation application executed on the user terminal. The user account may be linked to a credit card or a debit card issued by a card issuer. The electronic donation may be in form of an electronic financial transaction request requesting the transfer of money from the respective account to a destination entity. Non-limiting examples of electronic financial transactions are payments made on e-commerce, cashless payments at point-of-sales making use of a soft card installed on a user terminal, bank transfers initiated via a user interface executed on or accessible through a user terminal and to be processed from a user account or the like.

A user terminal may be any device connected to a network such as the internet and providing an interface to interact, directly or indirectly, with the donation processing server and to receive instructions from the user to initiate a payment, such as smartphones, personal computers, tablet computers configured to execute a respective application or capable to connect to a respective web-service over a network.

An electronic donation application may be a dedicated application for a user terminal and executed on the user terminal. Alternatively, the electronic donation application may be in the form of a plugin, an inFrame solution, an SDK or the like implemented on a website used for requesting and processing electronic financial transaction, e.g. a credit card payment interface. The electronic donation application may be implemented to be presented in the same window or frame of the website or the application or may be opened as a new window or frame. The electronic donation application may also provide a communication interface for the user to communicate with a donation processing server held by the card issuer for initiating, processing and authorizing electronic financial transactions. The electronic donation application may also communicate directly with the payment service provider (PSP) in order to request processing of the electronic financial transaction. Alternatively, the donation processing server may communicate directly with the PSP. The PSP may inform the user via the electronic donation application directly or via the donation processing server about the status of the electronic financial transaction.

The donation processing server may be any hardware and/or software, e.g. a virtual machine, used to receive, transmit and/or process the request for the financial transaction initiated by the user. Accordingly, the donation processing server communicates with the user via the electronic donation application executed on the terminal.

After the electronic donation application is provided to the user, either executed on the user terminal or accessible through the user terminal, a list of potential recipients is presented to the user for selection as destination entity for the electronic financial transaction. The list of potential recipients may be in form of a database located on the donation processing server or on a server on a donation receiving entity subsequently distributing donations to the final destination entities.

The user selects, via the electronic donation application, a recipient of the donation to be processed as an electronic financial transaction, as well as the amount for the electronic financial transaction. The amount for the electronic financial transaction may either be based on a user selection or may be determined based on other parameters selected by the user.

Both, the selected recipient and the amount or the kind of amount determination may be stored in an electronic configuration file created by the electronic donation application and as such may be used as preferences and/or suggestions for further donation requests. The electronic configuration file may be stored on the user terminal and/or on the donation processing server. The electronic configuration file may be accessed by the electronic donation application after identification and/or authentication of the user.

After the user has made the above selections or has confirmed the suggestions presented based on the information stored in the electronic configuration file, a donation request is transmitted from the electronic donation application to the donation processing server. The request may include the amount of the electronic financial transaction, the designated recipient for the donation, user information and information related to the electronic account to be used for the electronic financial transaction. The electronic donation application may request, prior to transmitting the donation request, confirmation and/or authentication of the user in order to authorize the request. Alternatively, the donation processing server, after receiving the donation request, may send a confirmation and/or authorization request to the electronic donation application to be presented to the user of the user terminal. In non-limiting examples, these requests may ask for a password or a PIN code or for biometric authentication of the user.

After the donation request is received by the donation processing server, it is stored by a collection application executed on the donation processing server. The collection application may store various donation requests for joint processing. The processing of the donation request(s) may be initiated based on certain predefined criteria, such as the amount(s) specified in the donation request(s) and stored in the collection application till a predefined threshold amount is exceeded and/or after a predefined period of time has lapsed. Accordingly, if the sum of the stored donation requests or the value of the only stored donation request exceeds the threshold amount, the requests proceed to processing. In addition, or alternatively, processing may be triggered after a predefined period of time has lapsed; according to this, stored donation requests may be processed e.g. once a month, independent from the amount. Alternatively, donation requests may be processed in a time independent manner if the collection of requests has exceeded the threshold amount.

Processing of the donation request includes transmitting financial transaction requests corresponding the donation requests from donation processing server to the respective entity in charge of processing the electronic financial transaction. If the electronic financial transaction is a bank transfer to be made from a bank account, the request is transmitted to the respective responsible bank. If the electronic financial transaction is to be made from a debit or a credit card, the request is send to the PSP for processing.

After processing of the financial transaction request at the respective responsible entity, a financial transaction confirmation receipt, indicating that the electronic financial transaction has been processed and has become effective, is received by the donation processing server. After the electronic financial transaction has been processed and confirmed, a donation confirmation may be sent to the selected destination entity, wherein the donation confirmation includes at least information regarding the amount and the corresponding user information. Alternatively, or in addition, a donation confirmation may be sent to the user via the electronic donation application executed on the user terminal for presentation to the user or it may be sent by different means for to the user, e.g. by email.

In another aspect of the present disclosure, the electronic donation application may be integrated in a payment processing application executed on or accessed by the user terminal from processing financial transactions from a user financial account over a network. According to this, the electronic donation application may be in form of a plugin, an inFrame solution, an SDK or the like implemented in the merchant's web site or in a dedicated application for a the user terminal, e.g. a credit card payment processing application for a mobile device such as a smart phone, used for processing and authorizing financial transactions initiated or requested by the user. A non-limiting example for a financial transaction to be processed from a user's financial account may relate to a purchase made by the user, which should be paid by the credit or debit card of the user associated a financial account of the user.

In yet another aspect of the present disclosure, the donation may be associated to a purchase made by the user. According to this, every time the user initiates a financial transaction such as a purchase which is to be paid by electronic payment, the electronic donation application suggests a donation. The suggestion may be based on information contained in the electronic configuration file. Alternatively or in addition, the donation request may be automatically initiated. When the donation is associated to a financial transaction initiated by the user, the amount of the purchase may by determined automatically. Automatic determination may be based on rounding of the amount or based on a fixed percentage of the amount of the financial transaction. The determination process may also include certain threshold levels used for rounding or associated to predefined percentage levels.

In yet another aspect of the disclosure, the financial transaction for the donation may be combined by the electronic donation application with the other financial transaction initiated by the user, e.g. with the financial transaction for the purchase resulting in a single combined financial transaction request. In this case single combined financial transaction request contains at least information related to the amounts of the donation and the financial transaction initiated by the user as well as information regarding the destination entities for the donation and the financial transaction initiated by the user. As such, two separated financial transaction are transmuted together to the donation processing server as a single transaction request for further processing of the respective payments.

In a further aspect of the disclosure, the donation processing server, having received the combined financial transaction request, splits the request into a financial request for the financial transaction initiated by the user, e.g. the purchase initiated by the user, and a financial donation request. The resulting financial transaction initiated by the user is processed normally, e.g. send to the PSP for payment, while the financial donation request is stored by the collection application on the donation processing server for further processing.

In another aspect of the disclosure, in case the destination entity the user would like to make a donation to is not included in the list presented by electronic donation application, the user may request inclusion of said destination entity. After the user has entered and submitted the respective information in an inclusion request to the donation processing server, the request may be processed directly by the donation processing server to include the requested destination entity into the request. Alternatively, a subsequent request may be sent to an intermediary subsequently distributing donations to the final destination entities. After the requested destination entity has been added, either by the intermediary subsequently distributing donations to the final destination entities or by the donation processing server, a confirmation message is presented to the user via the electronic donation application indicating the requested destination entity is now available for selection.

The present disclosure is also directed to a computer program product comprising program instructions for carrying out each of the method steps of the disclosure, when said product is executed on a computer.

Further, the present disclosure is directed to a computer readable medium storing program instructions, which, when executed by a processor of a computer cause the computer to perform each of the method steps of the disclosure.

One advantage that may be realized in the practice of some embodiments of the described methods is that financial transactions initiated and requested by a first user or owner of a joint account can be controlled, approved and authorized by a second user or owner of the joint account. Other technical advantages of the present disclosure will be readily apparent to one skilled in the art from the following description of preferred embodiments and the claims. Various embodiments of the present application obtain only a subset of the advantages set forth. No single advantage is critical to the embodiments. Any claimed embodiment may be technically combined with any other claimed embodiments.

### Brief description of the Drawings

The accompanying drawings illustrate exemplary embodiments of the disclosure and serve to explain, by way of example only, the principles of the disclosure.
FIG. 1 shows a flowchart of the user initiated single transaction electronic donation collection and processing method;
FIG. 2 shows a flowchart of the combined transaction electronic donation collection and processing method; and
FIG.3 shows a block diagram showing the entities involved in the collection and processing method for electronic donation.

### Detailed description

The present disclosure will now be described more fully hereinafter with reference to the accompanying figures, in which preferred embodiments are shown. The method, however, may be embodied in many different forms and should not be construed as limited to the embodiments set forth herein. It should be noted that these figures are intended to illustrate the general characteristics of the methods utilized in certain embodiments. However, the figures may not precisely reflect the precise structure or performance characteristic of any given embodiment. Moreover, in the figures similar reference numerals designate corresponding parts throughout the different views or embodiments.

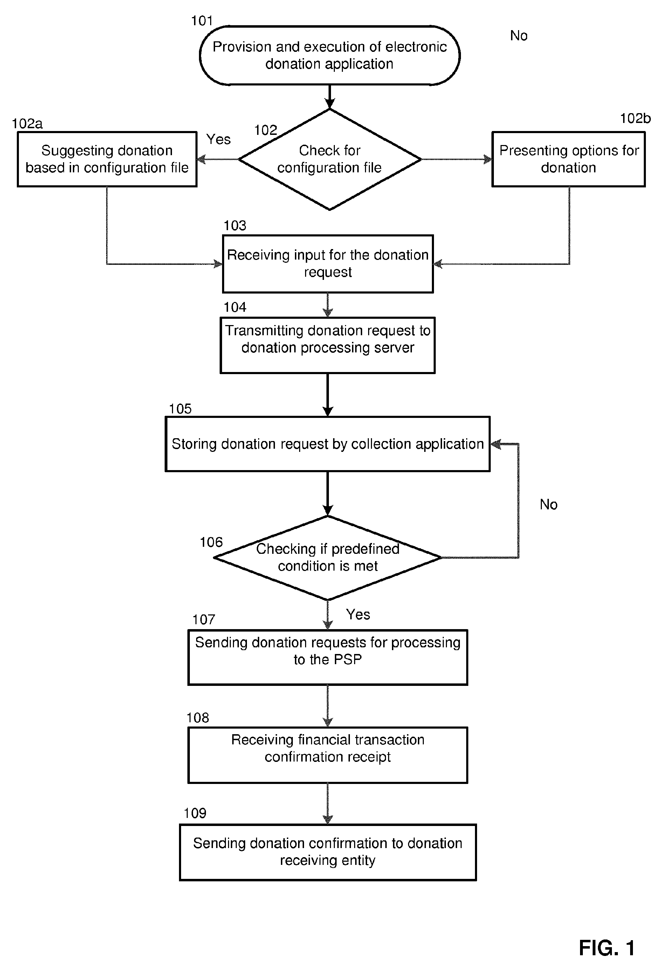

Fig. 1 is a flowchart illustrating exemplarily the overall steps for collecting and processing electronic donation from an electronic account of a user. In step 101 an electronic donation application is provided and executed on a user terminal.

At step 102 the electronic donation application checks for an electronic configuration file associated to the user and/or the user terminal. If an electronic configuration file exists, a destination entity and a donation amount are presented 102a to the user based on the information of the electronic configuration file. If no electronic configuration file exists, a list of possible destination entities and a selection interface for the donation amount is presented 102b to the user. In the present case, the content of the list corresponds to destination entities included in the services of an intermediary subsequently distributing donations to destination entities elected to receive donations.

At step 103 the electronic donation application receives user input for the donation request, either in form of confirmation of a suggestion based on the electronic configuration file or on user selection. In addition, if no electronic configuration file exists, or upon user input, the electronic donation application prompts information regarding the financial account to be used.

At step 104 the electronic donation application transmits a donation request to a donation processing server, wherein the request includes at least information regarding the amount for the donation, the designated recipient for the donation, user information and electronic account information.

At step 105, responsive to receiving the donation request at the donation processing server, a collection application being executed on the donation processing server stores the donation request.

At step 106, the donation processing server checks whether a predefined condition for (joint) processing of stored donation requests, namely the sum of the donation request(s) exceeding predefined threshold and/or after a predefined period of time lapsed after receiving the donation request is met. If a predefined condition is met, the stored donation request(s) is/are processed (step 107) and the corresponding financial transaction requests are sent to the PSP that processes the transaction as any other transaction, for example authorisation, clearing and settlement steps. As a donation receiving entity is in charge of subsequently distributing donations to the final destination entities, all financial transactions are directed to the donation receiving entity's account. If none of the conditions are met, the donation processing server continues to collect donation requests until a condition is met.

At step 108, the donation processing server receives a financial transaction confirmation receipt from the PSP, indicating that the financial transaction(s) is/are processed and has/have become effective. Subsequently, at step 109, a donation confirmation is sent from the donation processing server to the donation receiving entity subsequently distributing the donations, wherein the donation confirmation includes at least the amount of the donation corresponding to the designated recipient and may also include the corresponding user information.

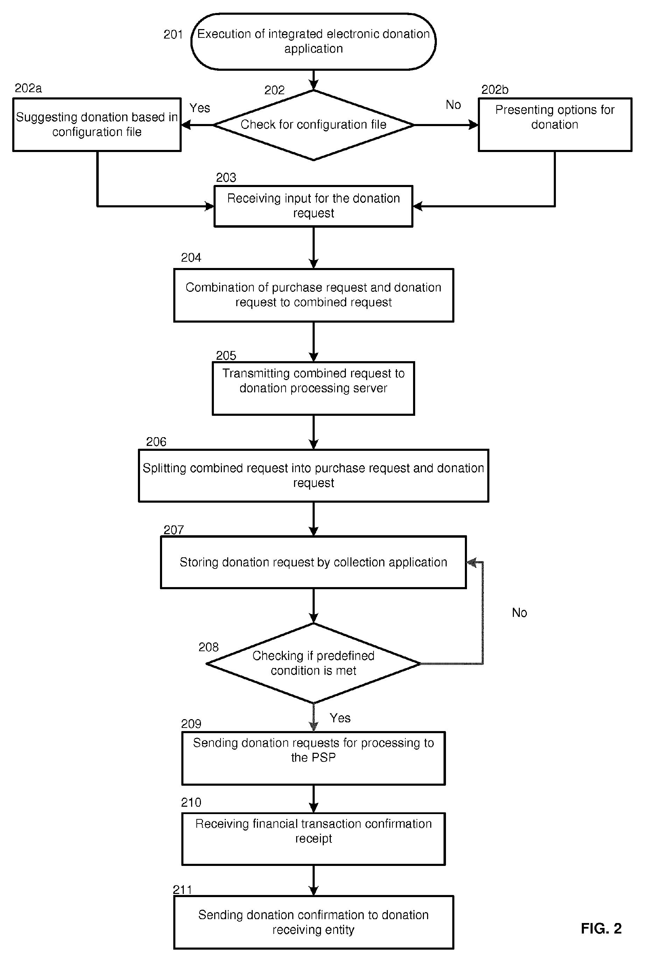

Fig. 2 is a flowchart illustrating exemplarily the overall steps for collecting and processing electronic donation from an electronic account of a user associated to another financial transaction initiated by the user, i.e. a purchase to be paid by electronic payment. In step 201 an electronic donation application integrated into a credit card payment processing application is executed on a user terminal.

At step 202 the electronic donation application checks for an electronic configuration file associated to the user and/or the user terminal. If an electronic configuration file exists, a destination entity and a donation amount are presented 202a to the user based on the information of the electronic configuration file. If no electronic configuration file exists, a list of possible destination entities and a selection interface for the donation amount is presented 202b to the user. In the present case, the content of the list corresponds to destination entities included in the services of a donation receiving entity subsequently distributing donations to destination entities elected to receive donations. As the donation is associated the purchase initiated by the user, further to fixed donation amounts, the amount may further be determined, either by rounding or percentage based, in relation the amount of the purchase made.

At step 203 the electronic donation application receives user input for the donation request, either in form of confirmation of a suggestion based on the electronic configuration file or on user selection. As the donation will be associated to the purchase, the same credit card will be used for the donation.

At step 204 the electronic donation application integrated into the payment processing application combines the individual requests, i.e. the donation request and the purchase request, into one single combined financial transaction request.

At step 205 the combined financial transaction request is transmitted to a donation processing server, wherein the request includes at least information regarding the amount for the donation, the designated recipient for the donation, amount of the purchase, recipient of the purchase amount, user information and credit card information.

At step 206, responsive to receiving the combined financial transaction request at the donation processing server, the donation processing server splits the combined request into a donation request and a purchase request.

At step 207 the donation request is stored by a collation application being executed on the donation processing server and the purchase request is sent for processing of the payment to the PSP.

At step 208, the donation processing server checks whether a predefined condition for (joint) processing of stored donation requests, namely the sum of the donation request(s) exceeding predefined threshold and/or after a predefined period of time lapsed after reception of the donation request. If a predefined condition is met, the stored donation request(s) is/are processed (step 209) and sent to the corresponding financial transaction requests are sent to the PSP. As a donation receiving entity is in charge of subsequently distributing donations to the final destination entities, all financial transactions are directed to the donation receiving entity's account. If none of the conditions are met, the donation processing server continues to collect donation requests until a condition is met.

At step 210, the donation processing server receives a financial transaction confirmation receipt from the PSP, indicating that the financial transaction(s) is/are processed and has/have become effective. Subsequently, at step 211, a donation confirmation is sent from the donation processing server to the donation receiving entity subsequently distributing the donations, wherein the donation confirmation includes at least the amount of the donation corresponding to the designated recipient and may also include the corresponding user information.

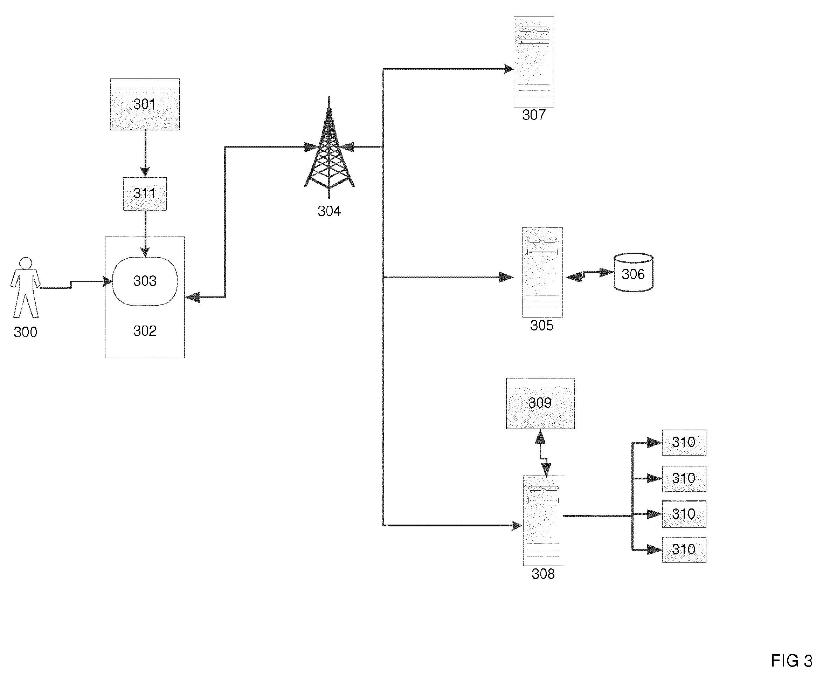

Fig. 3 is a block diagram showing the entities involved in the method for collecting and processing electronic donations from a user account. The user 300 having an electronic account 301 associated to a credit card 311 accesses a user terminal 302 executing are accessing a electronic donation application 303. The user terminal 302 is connected to a network 304 and by this the electronic donation application 303 can communicate with a donation processing server 305. The donation processing server 305 executes a collection application 306 and communicates with a PSP 307 and with a donation receiving entity 308 having an account 309 and in charge of subsequently distributing donations to the final destination entities 310. The collection application 306 stores donation requests from at least one user and monitors for conditions to be met for bulk-processing of the stored donation requests. The conditions are either that the sum of the stored donation requests exceeds a predefined threshold of a predefined period of time having lapsed after receiving the donation request.

After at least one of the conditions is met, the donation requests are processed. For this reason, the requests are transmitted to the PSP 307 and according to the donation requests, money is transferred from the electronic account 301 of the user to the account 309 of the donation receiving entity 308. After the financial transactions have been processed by the PSP 307, a transaction confirmation receipt is transmitted from the PSP 307 to the donation processing server 305. Subsequently, the donation processing server 305 transmits a donation confirmation to the donation receiving entity 308, wherein the donation confirmation contains the information necessary for distributing the donations to the designated entities 310, i.e. at least the amount corresponding each of the designated recipient 310. In addition, user information corresponding thereto can be included to allow subsequent issuing of the donation receipt from the designated recipient 310 to the user 300.

This description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art.

## Claims

1. A method for collecting and processing electronic donations from an electronic account of a user, initiated by the user at a user terminal, the method comprising
providing a electronic donation application to be executed on the user terminal;
presenting, via user selection of a recipient for the electronic donation, at least one destination entity as potential recipient for the electronic donation; receiving, via the electronic donation application, a user selection of a recipient for the electronic donation together with the amount of the financial transaction for the donation;
transmitting, from the electronic donation application, a donation request to a donation processing server, the request including the amount of the financial transaction, the designated recipient for the financial transaction, user information and electronic account information;
storing the donation request, by a collection application executed on the donation processing server;
transmitting at least one financial transaction request from the donation processing server to a payment service provider for processing the financial transaction from the financial account of the user to a donation receiving entity, wherein the at least one financial transaction request is transmitted when the amount(s) specified in the donation request(s) stored by the collection application exceed a predefined threshold amount and/or after a predefined period of time has lapsed;
receiving, at the donation processing server, a financial transaction confirmation receipt from the payment service provider, indicating that the financial transaction has been processed;
transmitting, from the donation processing server, a donation confirmation to the donation receiving entity, the donation confirmation containing at least the amount corresponding to the designated recipient and the user information.

2. The method according to claim 1, wherein the electronic donation application is integrated into a payment processing application executed on the user terminal for processing financial transactions from a user's financial account over a network.

3. The method according to claim 2, wherein the financial transaction is a purchase made by the user with a credit card or debit card associated with the user's financial account.

4. The method according to claim 3, wherein the amount of the donation is determined on the basis of the amount of the purchase.

5. The method according to claim 3 or 4, wherein the financial transaction for the donation is combined with the financial transaction of the purchase to a single combined financial transaction request.

6. The method according to claim 5, wherein the donation processing server splits the single combined financial transaction request into the financial transaction request of the purchase, which is sent for processing to the payment service provider, and the donation transaction request, which is stored by the collection application on the donation processing server.

7. The method according to any of the preceding claims, wherein the electronic donation application creates a configuration file.

8. The method according to claim 7, wherein the configuration file includes at least one preferred destination entity and/or a preferred donation amount.

9. The method according to claim 8, wherein the configuration file is stored on the donation processing server.

10. The method according to claim 9, wherein the configuration file is accessed by the electronic donation application upon authentication of the user.

11. The method according to claim 10, wherein authentication of the user is based on biometric authentication.

12. The method according to any of the preceding claims, wherein the user may suggest, via the electronic donation application, an additional recipient for the donation for inclusion into a list of presented destination entities.

13. The method according to claim 12, wherein the donation processing server sends a confirmation message to the electronic donation application, when the requested addition destination entity has been added to the list of presented destination entities.

14. A computer program product comprising computer executable instructions embodied in a computer readable medium for performing steps any of the method claims 1 to 13.

15. A computer readable medium storing program instructions, which, when executed by a processor of a computer cause the computer to perform each of the method steps of claims 1 to 13.
